# EUROPEAN PATENT APPLICATION

(11) **EP 1 298 567 A2**
(43) Date of publication of application: **02.04.2003**
(21) Application number: 02255696.3
(22) Date of filing: 15.08.2002
(51) Int. Cl.: G06F 17/60

(54) **A method of performing a data processing operation**

(30) Priority: 22.08.2001 GB 0120395
(71) Applicant: Hewlett-Packard Company, Palo Alto, CA 94304 (US)
(72) Inventor: Wray, Michael John, Bath BA1 3NE (GB)
(74) Representative: Lawrence, Richard Anthony

(57) **Abstract**

A computer network includes an on-line purchasing system which advertises goods for sale by means of a web-page accessible over the Internet. The web-page is stored on a server which is connected to an XML interface facility in the form of an XSLT file. The server is connected to the Internet by means of a first port. A client terminal is connected to the server by means of the first port. The server also includes a second port for connecting the server to an external authorisation computer via a connection. The server is configured to perform certain data processing operations, such as processing purchase orders sent from a user, forwarding processed purchase orders to a despatch service for effecting delivery etc., but only after an authorisation process has been completed. Initially, the client terminal sends a purchase order, in the form of an XML document, to the server. Since the purchase order will be in an unspecified data format, and therefore not suitable for being passed to the authorisation computer, it is applied to the XSLT file which transforms the XML document into a transformed purchase order having further data format. The transformed purchase order is in a form suitable for being passed to the authorisation computer.

## Description

This invention relates to a method of performing a data processing operation in a computer system, particularly a computer system which requires an authorisation operation to be performed prior to performing the data processing operation.

In many commercial and business environments, it is common for computer systems, on a network, to require authorisation to be effected prior to the computer system performing a requested data processing operation. The purpose of the authorisation is generally to check whether the person who is requesting the data processing operation (usually from a remote computer terminal) has the required security privileges for that operation. As an example, it is known to provide on-line banking facilities over the Internet. A user may access a server of the banking facility and request one of a number of data processing operations to be performed. Such operations may include displaying the user's account balance, requesting a transfer of funds, effecting a deposit of funds, and so on. Before such operations are performed, the server computer obtains authorisation by means of transferring at least part of the user's request message to an authorisation computer. The transferred part of the request message may simply be the user's identity, but may also include further information, including whether the user has any security certificates assigned to him/her. The authorisation computer performs a check, based on the information transferred, by comparing this information with pre-stored information concerning the user's security privileges. If the user is entitled to have the requested data processing operation performed, the authorisation computer informs the server in an authorisation message, the server thereafter continuing with the processing. If there is no entitlement, the authorisation computer likewise informs the server computer and a reject message is sent back to the user.

In order for data processing "requests" (i.e. computer messages specifying a particular operation which the user wishes to be performed at the 'recipient' server) to be authorised, then a mutually-agreed interface has to be defined, so that the recipient will know what parameters in the request actually refer or relate to, and so that a particular parameter or set of parameters can be transferred to the recipient for subsequent authorisation or rejection. In a conventional network object model, the recipient of the request will generally have knowledge of this interface, and so the relevant information can be extracted from the request in a straightforward manner.

It is becoming increasingly popular for computer systems to communicate using the so-called extensible markup language (XML). An XML program will be exchanged between different modules of a computer system, or network, in the form of a self-contained file called an XML document. An XML document will indicate the data processing required for operating on that document, and also any associated parameters. However, in general, XML documents need not follow a specific format or structure. In other words, there is no notion of an interface between the sender and the recipient when transferring the XML document. Accordingly, the recipient may have no way of understanding what particular parts of a received XML document mean, and what parts are to be transferred to an authorisation computer for performing the authorisation operation.

It will be appreciated by those skilled in the art that XML is a form of the Standard Generalised Markup Language (SGML). Full details of the XML syntax are obtainable from the World Wide Web Consortium (W3C), the body responsible for setting up the XML language.

According to a first aspect of the present invention, there is provided a method of performing a data processing operation in a computer system, the data processing operation being specified to the computer system in a request sent from a remote client computer, the computer system requiring an authorisation operation to be performed on the request prior to performing the specified data processing operation, the method comprising: receiving the request from the remote client computer, the request being provided in the form of an XML document in a first data format; transforming the XML document from its first data format thereby to generate a transformed XML document in a second data format suitable for input to an authorisation computer; transferring at least part of the transformed XML document to the authorisation computer, the authorisation computer thereafter determining whether or not the data processing request can be performed based on performing a comparison between the transferred part of the transformed XML document and predefined authorisation criteria.

By 'data format' is meant features of general structure or layout of the computer program making up the XML document.

In the method, the message is transformed from its first format into a second format, with the second format being suitable for input to the authorisation computer. Ultimately, no predefined interface is required between the client computer and the recipient. So long as the first format is successfully transformed into the second format, then the relevant parameters can be input to the authorisation computer.

The request in the first data format may conform to a predetermined XML schema. It will be understood by those skilled in the art that an XML schema is a definition program or file which defines a class of XML documents. An XML document which conforms to a particular schema is often referred to by the term "instance document". Again, the use and syntax of XML schemas is laid-down by the W3C and includes: (1) "XML Schema Part 0: Primer" (W3C Candidate Recommendation of 24 October 2000) currently obtainable at http://www.w3.org/TR/xmlschema-0/, (2) "XML Schema Part 1: Structures" (W3C Candidate Recommendation of 24 October 2000) currently obtainable at http://www.w3.org/TR/xmlschema-1/, and (3) "XML Schema Part 2: Datatypes" (W3C Candidate Recommendation of 24 October 2000) currently obtainable at http://www.w3.org/TR/xmlschema-2/.

The XML document, in its first data format, may comprise one or more parameters associated with the data processing operation to be performed, and the transforming operation may be performed by applying the XML document, in its first data format, to an interface file stored at the computer system, the interface file being arranged to analyse the XML document in its first data format and to generate therefrom the transformed XML document in the second data format, the second data format being of a predetermined form suitable for passing the or each parameter to the authorisation computer.

The interface file is preferably coded in the XML transformation language. The XML transformation language, referred to as XSLT, is a well known language for transforming XML documents into other XML documents. The XSLT language is often used to compose so-called XSL "stylesheets". An XSL stylesheet contains the instructions for transforming applied XML documents from one data format to another. In structural terms, an XSL stylesheet specifies the transformation of one tree of 'nodes' into another tree of 'nodes'. Essentially, XSL stylesheet files describe rules for transforming a so-called 'source tree' into a so-called 'result tree'. The transformation is achieved by associating patterns occurring in the input XML document with templates. A pattern is matched against elements in the source tree. A template is instantiated to create part of the result tree. The result tree is separate from the source tree. The structure of the result tree can be completely different from the structure of the source tree. In constructing the result tree, elements from the source tree can be filtered and reordered, and arbitrary structure can be added. Full details of the syntax and use of XSLT can be found in "XSL Transformations (XSLT) Version 1.0" (W3C Recommendation of 16 November 1999) currently at http://www.w3.org/R/1999/REC-xslt-19991116.

The request may be sent to the computer system using a secure data transfer protocol. The secure data transfer protocol may be the SSL protocol.

According to a second aspect of the present invention, there is provided a computer system configured to perform one ore more data processing operations, the computer system comprising: an input port for receiving a request from a remote client computer in the form of an XML document having a first data format, the request specifying the or each processing operation to be performed; a data interface arranged to perform a transformation operation on the received XML document thereby to generate a transformed XML document conforming to a second data format; and an authorisation port arranged to transfer the transformed XML document to an authorisation computer and for receiving an authorisation message back from the authorisation computer, the authorisation message indicating whether or not the data processing request can be performed.

The data interface may comprise an interface file stored on the computer system, the interface file being arranged to convert the received XML document from the unspecified first data format into the predefined second data format such that at least part of the transformed XML document can be input to an authorisation computer via the authorisation port. The interface file is preferably programmed using the XML transformation language.

The computer system may be arranged to receive data processing requests from client computers using a secure data transfer protocol. The secure data transfer protocol is preferably the SSL protocol.

The computer system may form part of a retail organisation computer network, and be configured to receive data processing requests in the form of purchase orders specifying goods to be purchased, the computer system effecting the processing of the purchase order in the event that authorisation is received from the authorisation computer. Alternatively, the computer system may form part of a banking computer network, and be configured to receive data processing requests relating to available banking facilities, the computer system effecting the requested banking facility in the event that authorisation is received from the authorisation computer. The requested data processing operations may relate to banking facilities such as displaying a user's balance, fund withdrawals, fund transfers, fund deposits, and so on.

According to a third aspect of the invention, there is provided a computer network including: a computer system; at least one client computer; and an authorisation computer, wherein the computer system is configured to perform at least one data processing operation, the computer system comprising: an input port for receiving a request from the client computer in the form of an XML document having a first data format, the request specifying the at least one processing operation to be performed; a data interface arranged to perform a transformation operation on the received XML document thereby to generate a transformed XML document conforming to a second data format; and an authorization port arranged to transfer the transformed XML document to the authorization computer and for receiving an authorization message back from the authorization computer, the authorization message indicating whether the data processing request can be validly performed.

The invention will now be described, by way of example, with reference to the accompanying drawings, in which:
Figure 1 is a block diagram showing processing elements in a computer network; and
Figure 2 is a flow diagram showing steps in a method of performing an authorisation operation.

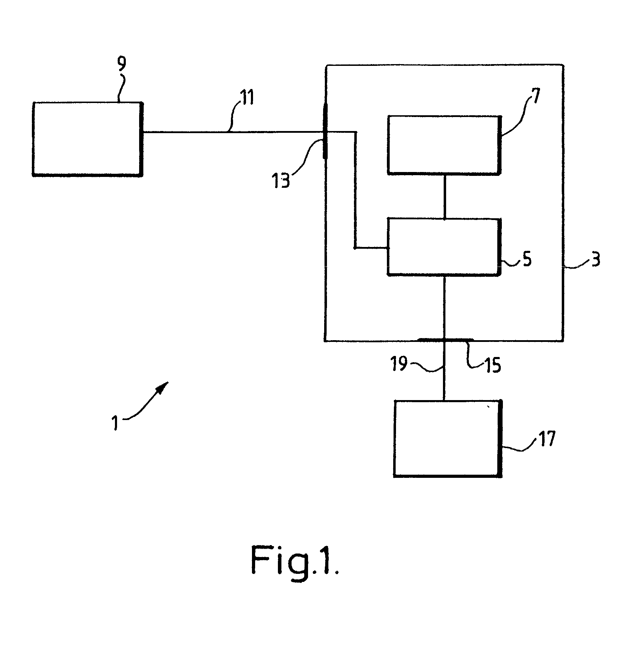

Referring to Figure 1, a computer network 1 includes an on-line purchasing system 3 which advertises goods for sale by means of a web-page accessible over the Internet. The web-page is stored on a server 5 which is connected to an XML interface facility 7 in the form of an XSLT file. The server 5 is connected to the Internet by means of a first port 13. In the example shown, a single client terminal 9 is shown connected to the server 5 by means of the first port 13 (although it will be appreciated that a very large number of client terminals may access a web-page simultaneously). The Internet connection between the client terminal 9 and the first port 13 is represented by the line 11. The server 5 also includes a second port 15 for connecting the server to an external authorisation computer 17 via a connection 19 (which may be an Internet connection or a dedicated connection).

The server 5 is configured to perform certain data processing operations, such as processing purchase orders sent from a user, forwarding processed purchase orders to a despatch service for effecting delivery etc., but only after an authorisation process has been completed. This involves the server 5 sending information, concerning at least part of the purchase order, to the authorisation computer 17. The authorisation computer 17 contains a pre-stored and up-to-date list concerning users of the online purchasing system and their associated security privileges. The method by which the on-line ordering and authorisation process is performed will now be described.

In use, a user operating the client terminal 9 invokes a dial-up connection to an Internet service provider (ISP), and enters the address of the web-site stored on the server 5 into the "address" field of a browser stored on the client terminal, this address usually being referred to as the Uniform Resource Locator (URL). Once a connection is established between the client terminal 9 and the server 5, the web-site is displayed by the browser of the client terminal. The user may then browse the web-site in order to select any items for purchase. In the event that the user wishes to make a purchase, a purchase order is constructed at the client terminal 9, the purchase order being in the form of an XML document having a first data format which conforms to a particular XML schema. As mentioned previously, an XML schema is a definition program or file which defines a class of XML documents.

An example XML schema for defining a class of XML documents relating to purchase orders is as follows:

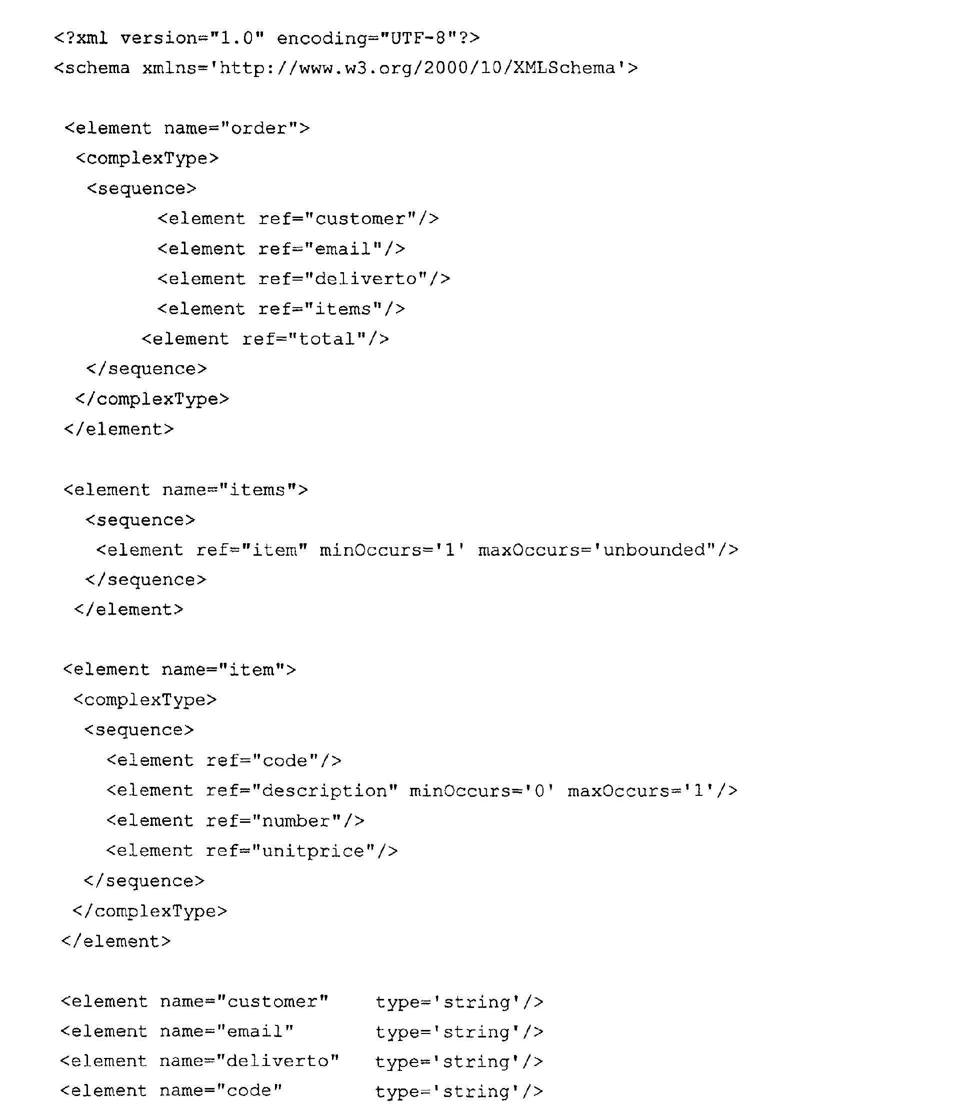

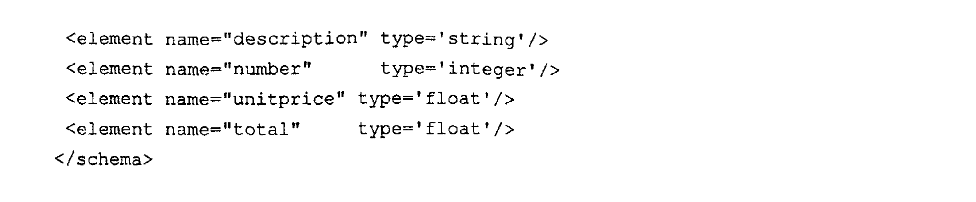

This XML schema defines a number of elements which make up a purchase order, the elements being "customer", which relates to a customer name or identity number, "email", which is the destination E-mail address, "deliverto", which is the delivery address relating to that customer, "code", which relates to the order code of a product to be ordered, "description", which is the description of the product to be ordered, "number" which relates to the quantity to be ordered, "unitprice" which is the price per unit product, and "total" which is the total price of the order.

The purchase order constructed at the client terminal 9 conforms to the above schema (and so may be considered an instance document for the schema). The purchase order, in the form of an XML document, is as follows:

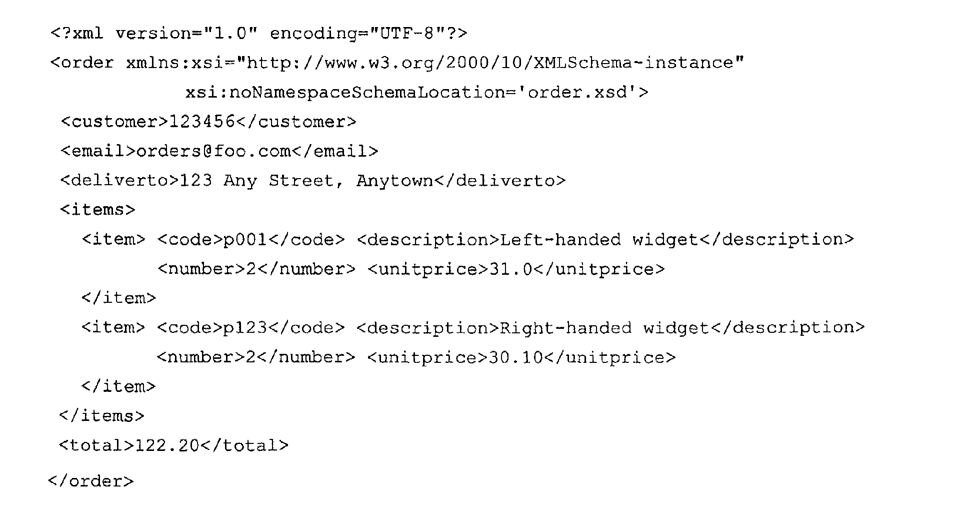

As will be understood, the purchase order specifies the "customer" by the code "123456" i.e. a unique code corresponding to the particular customer. The "email" field is specified as "orders@foo.com" which is the E-mail address for the server 5. The "deliverto" address is given as "123 Any Street, Anytown". Two products are specified in the purchase order, corresponding to "code" p001 and "code" p123. These products have, respectively, the product "description" of "left-handed widget" and "right-handed widget" and the "unitprice" of "31.0" and "30.10". The "number" of each product ordered is "2" and so the "total" is 122.20".

In the next stage, the purchase order (in the form of the XML document) is received by the server 5. However, since the server 5 has no information as to the data format of the received XML document (i.e. it is in an unknown data format), at this stage, the server does not send any part of the purchase order to the authorisation computer 17. In this respect, it will be appreciated that the above XML document, making up the purchase order, could be written in many alternative ways (data formats) whilst still conveying the same information in the purchase order. Indeed, if a different XML schema is used by a further client terminal, the XML document transferred therefrom may appear to have a completely different structure (even though the same information is being conveyed).

At this stage, the purchase order is applied to the XSLT transform file. The XSLT transform file comprises a set of rules for converting the XML document into a further, transformed, XML document which does comply with a prespecified data format. This transform file effectively acts as an interface for ensuring that the purchase order (or at least parts of it) will be in a form which can be interpreted or understood by the authorisation computer 17. The transformed XML document (hereinafter referred to as the "transformed purchase order") which is obtained by means of using the XSLT transform file 7, is stored in memory space (not shown) in the server 5.

An example version of an XSLT transform file is given below:

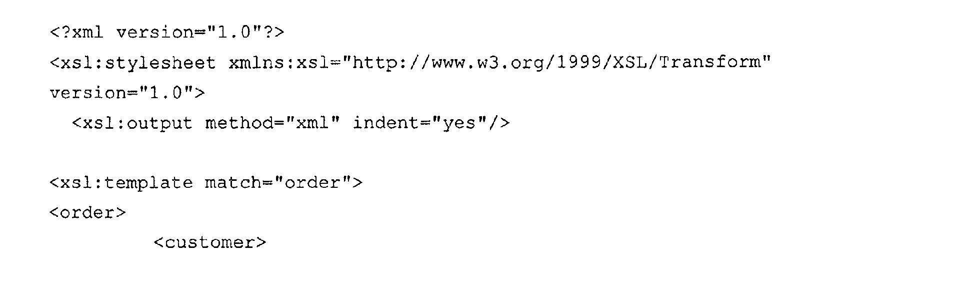

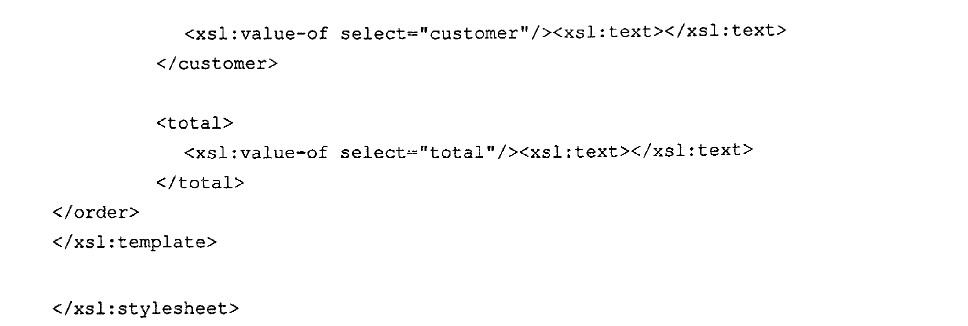

The purpose of this XSLT transform file is to extract data relating to the "customer" and "total" elements of the purchase order (XML document). The authorisation computer 17 requires these two elements in order to make its authorisation decision. Thus, there is effectively a predefined interface between the server 5 and the 17 in terms of the output which the XSLT transform file will produce.

In the next stage, authorisation is requested by means of sending the transformed purchase order to the authorisation computer 17 via the second port 15. In theory, any part of the transformed purchase order may be used by the authorisation computer 17. In this case, the whole transformed purchase order is used. The "customer", and "total" part of the purchase order is used by the authorisation computer 17, hence the above XSLT file is configured to extract this information.

The transformed purchase order obtained as a result of applying the XML document to the XSLT file is as follows:

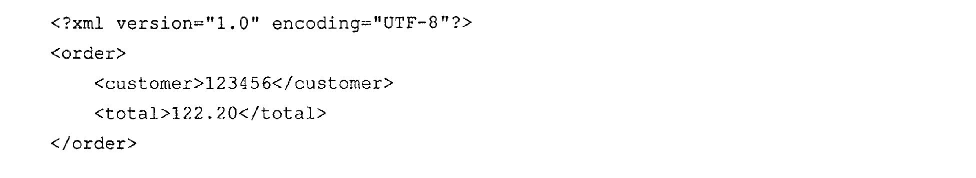

The authorisation computer 17 receives this transformed purchase order. The authorisation computer 17 is programmed to receive the data relating to "customer" and "total", and identifies security privileges which are associated with the "customer" data. The security privileges may specify that the user is only able to make purchases below a certain value, or the user has a certain purchase limit. The authorisation computer 17 then returns an authorisation message to the server 5, the authorisation message indicating whether the user's purchase order is to be rejected or allowed. If rejected, a suitable "rejection" authorisation message is sent back to the client computer 9 via the first port 13, and no further processing is performed by the server 5. If the purchase order is allowed, the authorisation message indicates an "allowed" status, and the server 5 proceeds to perform the processing operation requested in the original purchase order, e.g. the purchase request is processed, the user's account debited, and the purchased goods despatched. A confirmation message is sent back to the client computer 9 via the first port 13 indicating that the purchase order has been processed.

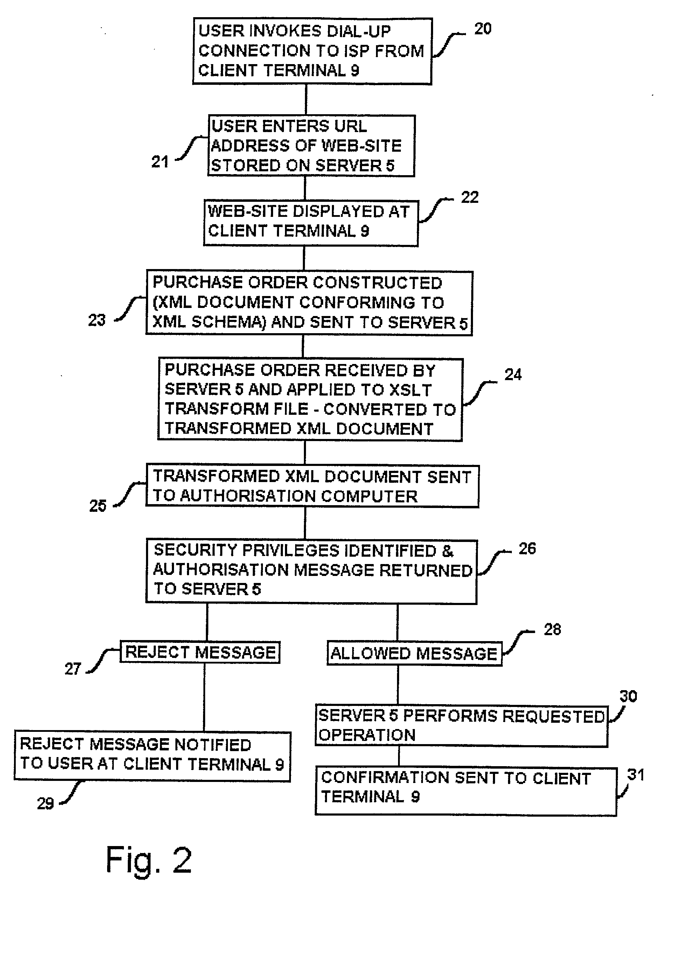

The above-mentioned steps in the example authorisation method are represented in flow-chart form in Figure 2, the steps being labelled as steps 20 to 31.

Preferably, the server 5 is configured as a secure server, that is, the server 5 requires all data processing requests (such as purchase orders) to be made using a secure data protocol. This secure data protocol might be a connection-oriented protocol such as the Secure Sockets Layer (SSL) protocol, which, as will be understood by those skilled in the art, is an industry standard protocol which provides data encryption, server authentication, message integrity and optional client authentication over computer networks. Alternatively, a 'connectionless' method could be used, for example by attaching a digital signature to the data processing request. Once the server 5 has itself authenticated the identity of the sender of the purchase order using e.g. the SSL protocol or a digital signature, the fact that authentication has been performed can then be added to the purchase order (in the XML document). Authentication may be specified as a condition of authorisation by the authorisation computer 17, and so the XSLT transform file should generate transformed purchase orders in such a format that the authorisation computer is able to extract this information and perform its authorisation operation based on previous authentication operations.

## Claims

1. A method of performing a data processing operation in a computer system (3), the data processing operation being specified to the computer system in a request sent from a remote client computer (9), the computer system requiring an authorisation operation to be performed, based on the request, prior to performing the specified data processing operation; the method comprising: receiving the request from the remote client computer, the request being provided in the form of an XML document in a first data format; transforming the XML document from its first data format thereby to generate a transformed XML document in a second data format suitable for input to an authorisation computer (17); transferring at least part of the transformed XML document to the authorisation computer, the authorisation computer thereafter determining whether the data processing request can be performed based on performing a comparison between the transferred part of the transformed XML document and predefined authorisation criteria.

2. A method according to claim 1, wherein the request in the first data format conforms to a predetermined XML schema.

3. A method according to claim 1 or claim 2, wherein the XML document, in its first data format, comprises at least one parameter associated with the data processing operation to be performed, and wherein the transforming operation is performed by applying the XML document, in its first data format, to an interface file stored at the computer system (3), the interface file being arranged to analyse the XML document in its first data format and to generate therefrom the transformed XML document in the second data format, the second data format being of a predetermined form suitable for passing the at least one parameter to the authorisation computer (17).

4. A method according to claim 3, wherein the interface file is coded in the XML transformation language.

5. A method according to any preceding claim, wherein the request is sent to the computer system (3) using a secure data transfer protocol.

6. A method according to claim 5, wherein the secure data transfer protocol is the SSL protocol.

7. A computer system (3) configured to perform at least one data processing operation, the computer system comprising: an input port (13) for receiving a request from a remote client computer (9) in the form of an XML document having a first data format, the request specifying the at least one processing operation to be performed; a data interface (7) arranged to perform a transformation operation on the received XML document thereby to generate a transformed XML document conforming to a second data format; and an authorization port (15) arranged to transfer the transformed XML document to an authorization computer (17) and for receiving an authorization message back from the authorization computer, the authorization message indicating whether the data processing request can be performed.

8. A computer system (3) according to claim 7, wherein the data interface (7) comprises an interface file stored on the computer system, the interface file being arranged to convert the received XML document from the unspecified first data format into the predefined second data format such that at least part of the transformed XML document can be input to an authorization computer (17) via the authorization port (15).

9. A computer system (3) according to claim 8, wherein the interface file is programmed using the XML transformation language.

10. A computer system (3) according to any of claims 7 to 9, wherein the computer system is arranged to receive data processing requests from client computers using a secure data transfer protocol.

11. A computer system (3) according to claim 10, wherein the secure data transfer protocol is the SSL protocol.

12. A computer system (3) according to any of claims 7 to 11, wherein the computer system forms part of a retail organization computer network and is configured to receive data processing requests in the form of purchase orders for specifying goods to be purchased, the computer system effecting the processing of the purchase order in the event that authorization is received from the authorization computer (17).

13. A computer network (1) including: a computer system (3); at least one client computer (9); and an authorisation computer (17), wherein the computer system is configured to perform at least one data processing operation, the computer system comprising: an input port (13) for receiving a request from the client computer in the form of an XML document having a first data format, the request specifying the at least one processing operation to be performed; a data interface (7) arranged to perform a transformation operation on the received XML document thereby to generate a transformed XML document conforming to a second data format; and an authorization port (15) arranged to transfer the transformed XML document to the authorization computer and for receiving an authorization message back from the authorization computer, the authorization message indicating whether the data processing request can be validly performed.
